(19) Europäisches Patentamt / European Patent Office / Office européen des brevets

(11) **EP 4 430 362 B1**

(12) **FASCICULE DE BREVET EUROPEEN**

(45) Date de publication et mention de la délivrance du brevet:
**05.11.2025 Bulletin 2025/45**

(21) Numéro de dépôt: **22814390.5**

(22) Date de dépôt: **09.11.2022**

(51) Classification Internationale des Brevets (IPC):
**G01C 21/02** *(2006.01)*

(52) Classification Coopérative des Brevets (CPC):
**G01C 21/025**

(86) Numéro de dépôt international:
**PCT/EP2022/081312**

(87) Numéro de publication internationale:
**WO 2023/083879 (19.05.2023 Gazette 2023/20)**

(54) **PROCEDE DE NAVIGATION HYBRIDE INERTIELLE/STELLAIRE A INDICATEUR DE PERFORMANCE D'HARMONISATION**

HYBRIDES TRÄGHEITS-/STERNNAVIGATIONSVERFAHREN MIT HARMONISIERUNGSLEISTUNGSINDIKATOR

HYBRID INERTIAL/STELLAR NAVIGATION METHOD WITH HARMONIZATION PERFORMANCE INDICATOR

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **09.11.2021 FR 2111864**

(43) Date de publication de la demande:
**18.09.2024 Bulletin 2024/38**

(73) Titulaire: **Safran Electronics & Defense**
**75015 Paris (FR)**

(72) Inventeur: **ELIE, Philippe**
**77550 MOISSY-CRAMAYEL (FR)**

(74) Mandataire: **Cabinet Boettcher**
**5, rue de Vienne**
**75008 Paris (FR)**

(56) Documents cités:
**EP-A1- 3 599 444     US-A1- 2021 247 188**

• **NI YUANMAN ET AL: "A stellar/inertial integrated navigation method based on the observation of the star centroid prediction error", REVIEW OF SCIENTIFIC INSTRUMENTS, AMERICAN INSTITUTE OF PHYSICS, 2 HUNTINGTON QUADRANGLE, MELVILLE, NY 11747, vol. 92, no. 3, 4 March 2021 (2021-03-04), XP012254420, ISSN: 0034-6748, [retrieved on 20210304], DOI: 10.1063/5.0027530**

## Description

La présente invention concerne le domaine de la navigation des véhicules, c'est-à-dire la localisation des véhicules le long de leur trajectoire d'un point de départ à un point d'arrivée. L'invention concerne plus particulièrement la navigation stellaire.

ARRIERE PLAN DE L'INVENTION

Il est connu des systèmes de navigation comprenant un dispositif de navigation inertielle associé à un dispositif de visée stellaire.

Document US 2021247188 A1 divulgue un procédé de navigation de véhicule. L'écart de position entre le GPS et le dispositif de suivi des étoiles est calculé et affiché sur le dispositif de positionnement céleste.

Le dispositif de navigation inertielle comprend une unité de mesure inertielle qui est fixée au véhicule porteur et qui comporte des capteurs inertiels linéaires (des accéléromètres) et des capteurs inertiels angulaires (généralement des gyromètres) disposés selon les axes d'un repère de mesure pour fournir des signaux, ou incréments, représentatifs de l'intégrale, sur des pas de temps successifs, du vecteur de force spécifique par rapport à un repère inertiel de référence (la force spécifique - en anglais « specific force », « g-force » ou « mass-specific force » - est une représentation de la somme, d'une part, de l'accélération du véhicule porteur de l'unité de mesure inertielle par rapport au repère inertiel et, d'autre part, de la pesanteur terrestre). Les capteurs sont reliés à un premier circuit électronique de traitement programmé pour exploiter les signaux fournis par l'unité de mesure inertielle de manière à déterminer une attitude inertielle du plan horizontal du dispositif de visée stellaire.

Le dispositif de visée stellaire comprend au moins un capteur d'image, ou viseur stellaire, fixé au véhicule porteur et relié à un deuxième circuit électronique de traitement programmé pour reconnaître des objets célestes dans les images fournies par le capteur d'image et en déduire une position stellaire du véhicule porteur. Pour ce faire, le deuxième circuit électronique de traitement, connaissant la position du véhicule porteur obtenue par ailleurs, exploite l'attitude inertielle afin de :

- déterminer la verticale locale au dispositif de visée stellaire pour en déduire la direction de pointage du capteur d'image et la portion de ciel entrant dans le champ du capteur d'image ;
- identifier les objets célestes présents dans le champ en question au moyen d'une éphéméride ;
- déterminer dans un repère de mesure du dispositif de visée stellaire l'ascension et la déclinaison des objets célestes et en déduire par triangulation la position stellaire du véhicule porteur.

Les performances de tels systèmes de navigation dépendent principalement de l'harmonisation du référentiel de mesure du dispositif de visée stellaire avec celui de l'unité de mesure inertielle. Il en résulte que l'installation est complexe car il convient de veiller à la précision du montage relatif du dispositif de visée stellaire et de l'unité de mesure inertielle en position et en attitude. Si l'erreur d'attitude peut être définie lors d'une opération de maintenance, il n'y a pas d'instrument pour connaître l'erreur d'attitude de l'unité de mesure inertielle en mouvement. En revanche, il existe une méthode d'estimation des erreurs d'harmonisation et d'attitude, basée sur une modélisation des erreurs de l'unité de mesure inertielle. Cette modélisation permet d'extraire l'erreur commise sur une direction inertielle et de la relier à l'erreur de position et d'attitude de l'unité de mesure inertielle. Cette modélisation peut être implémentée via une régression linéaire, mise en œuvre par un filtrage de KALMAN ou un moindre carré par exemple, pour estimer les erreurs constantes d'attitude et d'harmonisation. Ceci ne permet cependant pas de s'assurer que l'harmonisation du dispositif de visée avec l'unité de mesure inertielle est performante.

Il existe par ailleurs des dispositifs de positionnement satellitaire ou systèmes de navigation par satellites (système dits GNSS de l'anglais « Global Navigation Satellite System ») comprenant un récepteur de signaux satellitaires de positionnement, embarqué sur le véhicule porteur, qui fournit une position dite GNSS dudit véhicule. Les signaux satellitaires sont envoyés par des satellites d'une constellation de satellites (comme celles des systèmes GPS, GALILEO, GLONASS, BEIDOU...) et permettent de calculer une pseudodistance entre le récepteur et chaque satellite à partir de la durée entre l'instant d'émission du signal par chaque satellite et l'instant de réception dudit signal par le récepteur. La position de chaque satellite étant connue grâce à une éphéméride, la position du récepteur peut être calculée par trilatération. La position satellitaire ainsi calculée est très précise.

Il est connu de réaliser des navigations hybridées inertielle/GNSS fournissant au moyen d'un filtrage de Kalman une position hybridée entretenue par la localisation inertielle et recalée périodiquement au moyen de la position satellitaire.

OBJET DE L'INVENTION

L'invention a notamment pour but de fournir un moyen de surveillance d'au moins une partie des erreurs influençant la performance d'un dispositif de visée stellaire.

RESUME DE L'INVENTION

A cet effet, on prévoit, selon l'invention un procédé de navigation d'un véhicule équipé d'un dispositif de visée stellaire, d'un premier dispositif de mesure inertielle et d'un dispositif de positionnement satellitaire, le dispositif de visée stellaire et le premier dispositif de mesure inertielle étant solidaires d'un même support. Le procédé comprend les étapes de :

- commander des mouvements du support selon différents caps de visée du dispositif de visée stellaire,
- simultanément à ces mouvements, calculer dans un plan horizontal des premières positions du véhicule à partir d'un premier algorithme de navigation utilisant des mesures stellaires et des deuxièmes positions du véhicule à partir d'un deuxième algorithme de navigation utilisant selon un couplage des premières mesures inertielles issues du premier dispositif de mesure inertielle et des mesures satellitaires,
- calculer des premiers écarts entre les premières positions et les deuxièmes positions correspondant à chaque cap de visée et les représenter dans un repère polaire en fonction du cap correspondant et des valeurs desdits premiers écarts,
- effectuer une régression circulaire sur lesdits premiers écarts pour déterminer dans ce repère polaire un premier cercle représentatif de l'ensemble des premiers écarts,
- déterminer un rayon du cercle et un deuxième écart entre un centre du premier cercle et une origine du repère.

Les écarts de position sont notamment dus à l'erreur d'attitude du plan horizontal défini par le dispositif de mesure inertielle et à l'erreur d'harmonisation entre le dispositif de mesure inertielle et le dispositif de visée stellaire. Alors qu'une représentation de ces écarts dans un repère cartésien latitude/longitude ne permettrait pas de distinguer la contribution de ces deux défauts aux écarts, une représentation dans un repère polaire en fonction du cap, comme proposé dans l'invention, permet de les dissocier, l'une des erreurs étant modulée par la rotation en cap alors que l'autre ne l'est pas. Une fois le premier cercle défini par régression circulaire, le rayon du cercle est représentatif de l'erreur d'harmonisation entre le dispositif de mesure inertielle et le dispositif de visée stellaire, tandis que le deuxième écart, entre le centre du cercle et l'origine du repère, est représentatif de l'erreur d'attitude du plan horizontal du dispositif de mesure inertielle. On dispose donc d'une modélisation simple permettant de calculer ces erreurs et de les surveiller.

De préférence, le procédé comprend les étapes de

- ramener tous les premiers écarts à un même cap pour obtenir des troisièmes écarts,
- effectuer une régression linéaire sur les troisièmes écarts pour obtenir une droite représentative de l'ensemble des troisièmes écarts,
- en déduire une erreur d'attitude du plan horizontal et une erreur d'harmonisation entre le dispositif de visée stellaire et le dispositif de mesure inertielle,
- définir dans le repère polaire un deuxième cercle ayant un rayon égal à l'erreur d'harmonisation et un centre séparé d'une origine du repère selon un vecteur correspondant à l'erreur d'attitude du plan horizontal en fonction du cap,
- vérifier une cohérence entre le premier cercle et le deuxième cercle.

La cohérence des deux cercles permet de surveiller la précision de l'estimation des erreurs d'harmonisation et d'attitude du plan horizontal obtenue par la régression circulaire.

L'invention concerne également un système de navigation mettant en œuvre ce procédé et un véhicule pourvu d'un tel système de navigation.

D'autres caractéristiques et avantages de l'invention ressortiront à la lecture de la description qui suit d'un mode de réalisation particulier et non limitatif de l'invention.

BREVE DESCRIPTION DES DESSINS

Il sera fait référence aux dessins annexés, parmi lesquels :

La figure 1 est une vue schématique d'un aéronef équipée d'un système de navigation selon l'invention ;
La figure 2 est une vue schématique du système de navigation selon l'invention ;
La figure 3 est une vue schématique du dispositif de visée stellaire ;

La figure 4 est une représentation schématique d'un indicateur obtenu par la mise en œuvre du procédé de l'invention, révélant une performance correcte du viseur stellaire ;

La figure 5 est une représentation schématique de ce même indicateur obtenu par la mise en œuvre du procédé de l'invention, révélant une performance dégradée du viseur stellaire.

## DESCRIPTION DETAILLEE DE L'INVENTION

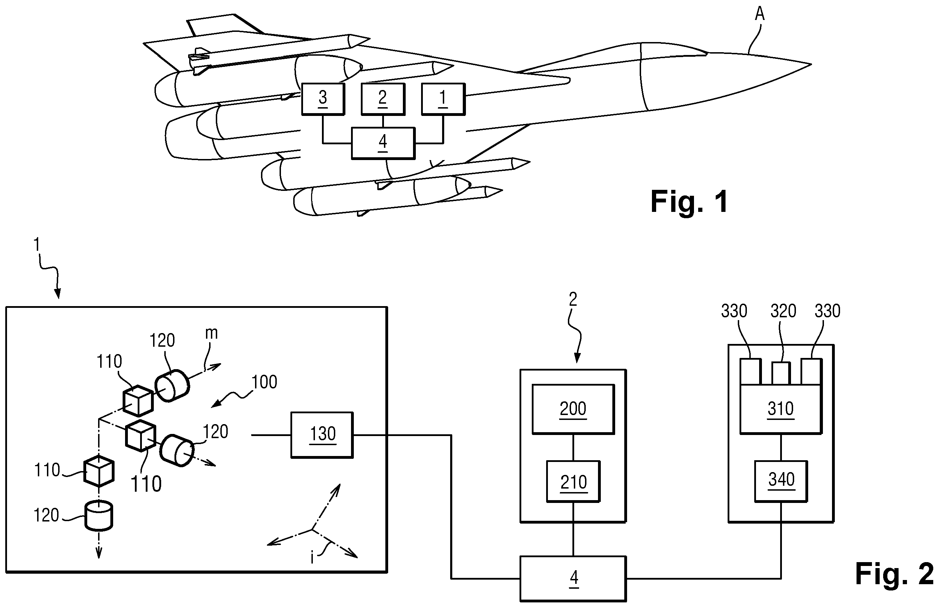

En référence aux figures 1 et 2, l'invention est ici décrite dans une application aéronautique, le système de navigation de l'invention étant embarqué dans un avion A connu en lui-même. Le système de navigation selon l'invention comprend un dispositif de navigation inertielle généralement désigné en 1, un dispositif de navigation satellitaire généralement désigné en 2, un dispositif de navigation stellaire généralement désigné en 3 et une unité électronique de calcul de navigation généralement désigné en 4.

Le dispositif de navigation inertielle 1, connu en lui-même, comprend une unité de mesure inertielle 100 fixée à la structure de l'aéronef A via des moyens de suspension selon un montage classique dit « strap-down ». L'unité de mesure inertielle 100 comporte des capteurs inertiels, à savoir des capteurs inertiels linéaires (plus précisément des accéléromètres 110) disposés selon les axes d'un repère de mesure m pour mesurer la « vitesse gravitationnelle » de ce repère (c'est-à-dire l'intégrale temporelle de la force spécifique présente au niveau du centre de ce repère) et des capteurs inertiels angulaires, ici des gyromètres 120, disposés selon les axes de ce repère pour mesurer la rotation du repère de mesure m par rapport à un repère inertiel i. Les capteurs inertiels ne fournissent pas des valeurs absolues mais des incréments représentatifs d'une variation de la grandeur mesurée par rapport à la précédente mesure. Le repère inertiel i est par exemple le repère de mesure à la mise sous tension de l'unité de mesure inertielle 100 ou n'importe quel autre repère inertiel décalé angulairement par rapport à ce dernier. Les incréments de l'intégrale de la force spécifique sont ainsi représentatifs d'une variation des composantes de la vitesse gravitationnelle selon les trois axes du repère m. Les incréments de rotation sont ainsi représentatifs de la variation de l'intégrale dans le temps de la vitesse de rotation angulaire du repère de mesure m par rapport au repère inertiel i et sont fournis sous la forme de quaternions, d'angles d'Euler, de matrices de rotation, ou de vecteurs de Bortz. Les capteurs inertiels fournissent ainsi des signaux primaires contenant des premières données représentatives d'une variation de vitesse gravitationnelle (mesure accélérométrique) et des deuxièmes données représentatives d'une variation d'angle (mesure gyrométrique). L'unité de mesure inertielle 100 est reliée à une unité électronique de traitement 130 qui exploite ces signaux pour calculer au moyen d'un algorithme de navigation inertielle des données de localisation inertielle comprenant des données d'attitude (roulis, tangage, lacet), de vitesse et de position. Ce calcul est classique et n'est pas plus détaillé ici.

De manière connue en elle-même, le dispositif de navigation satellitaire 2 comprend :

- d'une part, un récepteur 200 de signaux satellitaires de positionnement émis par des satellites d'une constellation de satellites d'un système GNSS tels que les systèmes GPS, GALILEO, GLONASS, BEIDOU...
- d'autre part, une unité électronique de traitement 210 relié au récepteur 200.

L'unité électronique de traitement 210 est agencée de manière classique pour calculer :

- une pseudodistance entre le récepteur 200 et chaque satellite à partir de la durée entre l'instant d'émission du signal par chaque satellite et l'instant de réception dudit signal par le récepteur 200 ;
- la position du récepteur par trilatération à partir des pseudodistances et de la position de chaque satellite connue grâce à une éphéméride. La position du récepteur est appelée dans la suite « position satellitaire ».

Ce calcul est classique et n'est pas plus détaillé ici.

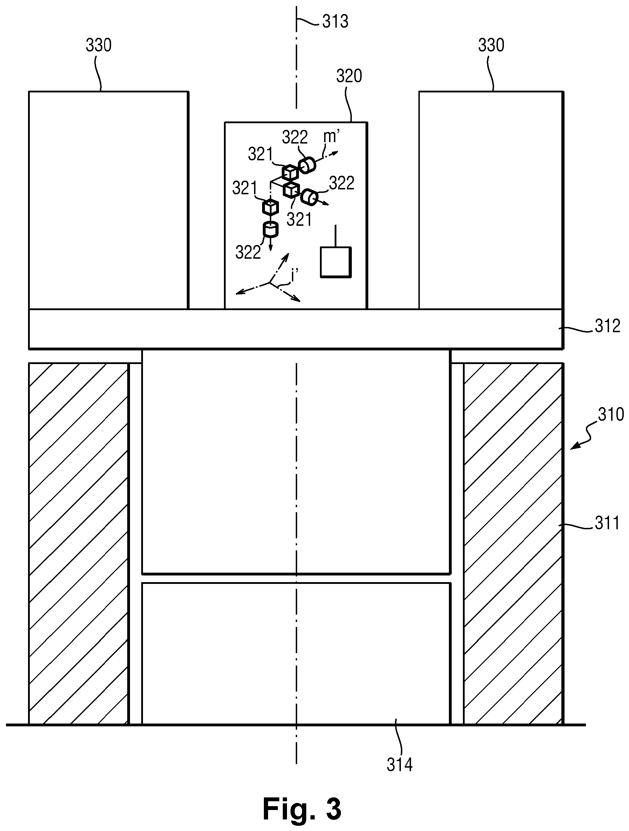

En référence à la figure 3, le dispositif de navigation stellaire 3 comprend une table rotative 310 sur laquelle sont fixés une unité de mesure inertielle 320 et deux viseurs stellaires 330.

La table rotative 310 comprend un bâti 311, une platine 312, formant support, montée pour pivoter sur le bâti 311 autour d'un axe de rotation 313, et un moteur 314 agencé pour entraîner en rotation la platine 312 par rapport au bâti 311. Les moyens de guidage en rotation de la platine 312 par rapport au bâti 311 ne sont pas représentés mais sont des roulements (à billes, à rouleaux, à aiguilles) et éventuellement des butées axiales (par exemple à aiguilles) connus en eux-mêmes. Le bâti 311 est monté sur la structure de l'avion A de telle manière que l'axe de rotation 313 soit parallèle à un axe vertical de l'avion A lorsque le roulis et le tangage de celui-ci sont nuls.

L'unité de mesure inertielle 320 est fixée à la platine 312 selon un montage classique dit « strap-down » et comporte, comme l'unité de mesure inertielle 100, des capteurs inertiels, à savoir des capteurs inertiels linéaires (des accéléromètres 321) disposés selon les axes d'un repère de mesure m' pour mesurer la « vitesse gravitationnelle » de ce repère et des capteurs inertiels angulaires (des gyromètres 322), disposés selon les axes de ce repère pour mesurer la rotation du repère de mesure m' par rapport à un repère inertiel i'. On comprend que l'unité de mesure inertielle 320 permet de déterminer un plan horizontal local et la verticale locale de la table rotative 310 et donc du dispositif de visée 300. L'unité de mesure inertielle 320 étant montée sur la platine 312, la précision du guidage de la rotation de la platine 312 par rapport au bâti 311 n'a pas d'incidence sur la précision des mesures fournies par le dispositif de visée stellaire 300 (si l'unité de mesure inertielle était fixée au bâti 311, la précision du guidage en rotation aurait au contraire une influence importante sur la précision des mesures puisque la verticale locale déterminée par l'unité de mesure inertielle serait celle du bâti 311 et serait assimilable à celle de la table 312 aux tolérances de guidage près).

Les viseurs stellaires 330 sont disposés par exemple à 180° l'un de l'autre pour limiter l'encombrement (on pourrait également en avoir trois disposés idéalement 120°) et comprennent chacun un capteur d'image et une optique associée. Les capteurs d'images et les optiques sont connus en eux-mêmes et sont agencés (sensibilité, champ, focale, définition, résolution...) pour capturer des images du ciel permettant d'y détecter des objets célestes.

L'unité de mesure inertielle 320 et les viseurs 330 sont reliés à une unité électronique de traitement 340 qui :

- exploite les signaux fournis par l'unité de mesure inertielle 320 pour calculer au moyen d'un algorithme de navigation inertielle des données de localisation inertielle comprenant des données d'attitude (roulis, tangage, lacet), de vitesse et de position (ce calcul étant classique, il n'est pas plus détaillé ici) ;
- détermine précisément, à partir de ces données d'attitude, la verticale locale au dispositif de visée stellaire 2 (et donc l'attitude du plan horizontal) et donc la direction de pointage de chaque viseur 330,
- détermine grossièrement, à partir de la position du véhicule et de la direction de pointage de chaque viseur 330, la portion de ciel visible par chacun des viseurs 330 ;
- à partir d'une éphéméride, identifie des objets célestes visibles dans les images capturées par les viseurs 330 pour la position en question ;
- détermine dans un repère de mesure du dispositif de visée stellaire 3 l'ascension et la déclinaison des objets célestes et en déduit par triangulation la position stellaire de l'avion A.

Ce calcul est classique et n'est pas plus détaillé ici. On notera néanmoins que plus les objets célestes choisis pour la triangulation seront éloignés les uns des autres et plus la position stellaire sera précise.

Les unités électroniques de traitement 130, 210, 340 ont ici sensiblement la même structure et comportent un processeur et une mémoire contenant un programme agencé pour exploiter les données comme expliqué ci-dessus lorsqu'il est exécuté par le processeur. Les unités électroniques de traitement 130, 210, 340 sont reliées à l'unité électronique de calcul de navigation 4 pour lui transmettre des signaux contenant respectivement la localisation inertielle, la position satellitaire et la position stellaire. L'unité électronique de calcul de navigation 4 est en outre reliée au moteur 314.

L'unité électronique de calcul de navigation 4 est connue en elle-même et comprend un boîtier renfermant au moins un processeur et une mémoire contenant un programme informatique exécutable par le processeur et qui comprend des instructions agencées pour mettre en œuvre le procédé de l'invention.

D'une manière générale, le procédé de l'invention est ici agencé pour permettre, d'une part, de calculer une navigation à partir des signaux fournis par les unités électroniques de traitement 130, 210, 340 et, d'autre part, de surveiller l'erreur d'harmonisation du dispositif de visée stellaire avec l'unité de mesure inertielle 320 et l'erreur d'attitude du plan horizontal défini par l'unité de mesure inertielle 320 en exploitant les signaux satellitaires.

Concernant la navigation, le procédé comprend les étapes de :

- exploiter les signaux fournis par les unités électroniques de traitement 130, 210 avec un couplage continu serré (mais l'invention fonctionne aussi avec un couplage lâche) pour calculer une position hybride inertielle/satellitaire au moyen d'un algorithme principal de navigation opérationnelle hybridée,
- exploiter les signaux fournis par l'unité électronique de traitement 340 pour recaler périodiquement la position hybride inertielle/satellitaire,
- en cas d'indisponibilité des signaux satellitaires, exploiter les signaux fournis par les unités électroniques de traitement 130, 340 avec un couplage serré pour calculer une position hybride inertielle/stellaire au moyen de l'algorithme principal de navigation opérationnelle hybridée.

Les positions hybridées sont utilisées pour piloter l'avion A en vue de l'amener de son point de départ à son point d'arrivée.

Concernant la surveillance, le procédé comprend les étapes de :

- commander le moteur 314 pour provoquer des mouvements de la platine 312 selon différents caps du viseur stellaire 330,
- simultanément à ces mouvements, calculer dans le plan horizontal, des premières positions de l'avion A à partir d'un premier algorithme additionnel de navigation utilisant des mesures stellaires et des deuxièmes positions de l'avion A à partir d'un deuxième algorithme additionnel de navigation utilisant selon un couplage continu serré (ou lâche comme précédemment indiqué) des premières mesures inertielles issues du dispositif de mesure inertielle 320 et des mesures satellitaires,

- calculer des premiers écarts entre les premières positions et les deuxièmes positions correspondant à chaque cap et les représenter dans un repère polaire P en fonction du cap correspondant et des valeurs des premiers écarts (on choisit ici de placer les moyennes des valeurs des premiers écarts par cap),
- effectuer une régression circulaire sur lesdits premiers écarts pour déterminer dans ce repère polaire un premier cercle C1 représentatif de l'ensemble des premiers écarts,
- déterminer un rayon r1 du cercle C1 et un deuxième écart entre un centre c1 du premier cercle C1 et une origine o du repère polaire P.

Le rayon r1 du cercle C1 est égal à une première estimation de l'erreur d'harmonisation entre le dispositif de mesure inertielle 320 et les viseurs stellaires 330 du dispositif de visée stellaire 3, tandis que le deuxième écart entre le centre c1 du cercle C1 et l'origine o du repère polaire P est égal à une première estimation de l'erreur d'attitude du dispositif de mesure inertielle 320.

Le procédé comprend en outre les étapes de :

- ramener tous les premiers écarts à un même cap, ici 0°, pour obtenir des troisièmes écarts (ceci est réalisé en faisant tourner les premiers écarts calculés pour chaque cap pour les ramener à 0°),
- effectuer une régression linéaire sur les troisièmes écarts pour obtenir une droite représentative de l'ensemble des troisièmes écarts,
- en déduire, de manière connue en elle-même, une deuxième estimation de l'erreur d'attitude du plan horizontal et une deuxième estimation de l'erreur d'harmonisation entre les viseurs stellaires 330 du dispositif de visée stellaire 3 et le dispositif de mesure inertielle 320,
- définir dans le repère polaire P un deuxième cercle C2 ayant un rayon r2 égal à la deuxième estimation de l'erreur d'harmonisation et un centre c2 séparé de l'origine o du repère polaire P selon un vecteur correspondant à la deuxième estimation de l'erreur d'attitude du plan horizontal en fonction du cap,
- vérifier une cohérence entre le premier cercle C1 et le deuxième cercle C2.

L'écart de position du dispositif de visée stellaire avec la position de référence ramenée dans le repère géographique local [g] est exprimée selon loi suivante :

$$Y_g = \varphi + \widehat{T}_{gb}.T_{ba}.\widehat{T}_{ak}.Harmo_k$$

dans laquelle on ne considère que les contributeurs suivants :

1. Erreur de verticale $\varphi$ directement exprimé dans le repère géographique local [g] ;
2. Erreur d'harmonisation stationnaire dans le repère du viseur [k] *$Harmo_k$* et qu'il convient de projeter dans le repère géographique local [g] via

   a. $\mathbf{T}_{ba}$ matrice stationnaire connue,
   b. $\widehat{\mathbf{T}}_{ak}$ matrice d'harmonisation
   c. $\widehat{\mathbf{T}}_{gb}$ matrice d'attitude (Cap, Roulis Tangage)

Ainsi en faisant varier le cap de 0° à 360°, l'erreur de position en coordonnée polaire obéit à une loi de type cercle dont le centre est l'erreur de verticale et le rayon l'erreur d'harmonisation.

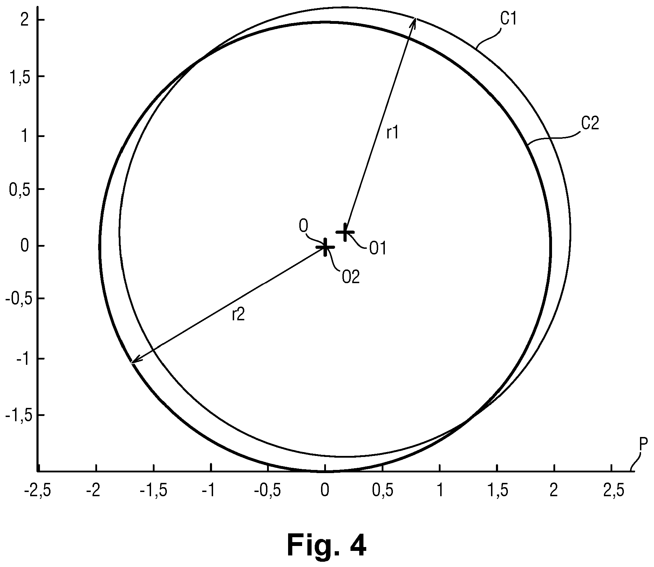

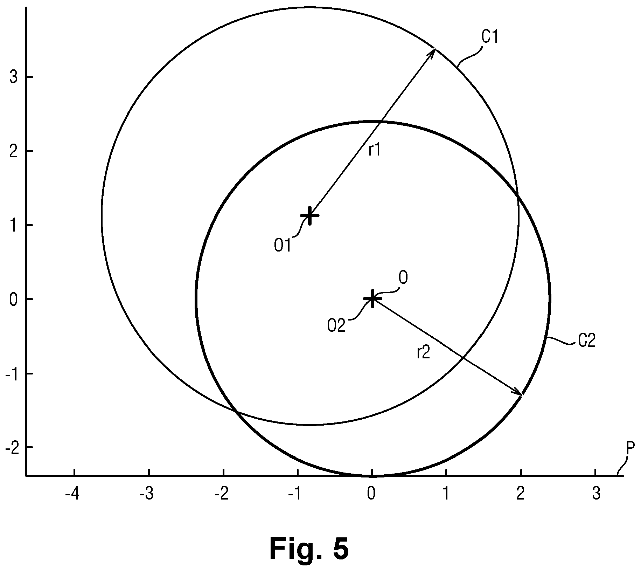

Il est possible de présenter au pilote de l'avion une représentation des deux cercles C1, C2 dans le repère P comme sur les figures 4 et 5.

De préférence, le procédé comprend l'étape de déterminer un indicateur représentatif de la cohérence entre le premier cercle C1 et le deuxième cercle C2. A titre d'exemple, cet indicateur est un pourcentage représentatif du taux de recouvrement du cercle C2 par le cercle C1. L'indicateur peut également être une indication d'une cohérence suffisante ou pas (en comparant le taux de recouvrement à un seuil au-delà duquel on considère que la cohérence est suffisante). C'est de préférence l'indicateur qui sera présenté au pilote de l'avion A.

On comprend que dans ce mode de réalisation préféré :

- le dispositif de mesure inertielle 320 forme un premier dispositif de mesure inertielle qui est associé au dispositif de visée stellaire et qui fournit des premières mesures inertielles utilisées pour déterminer une orientation du dispositif de visée stellaire dont dépendent les mesures stellaires ;

- le dispositif de mesure inertielle 100 forme un deuxième dispositif de mesure inertielle qui fournit des deuxièmes mesures inertielles qui sont utilisées en couplage avec les mesures satellitaires pour élaborer des troisièmes positions au moyen d'un troisième algorithme de navigation.

Un exemple numérique va maintenant être décrit. Le dispositif de visée a été orienté selon cinq caps de visée différents et 342 premiers écarts (Ymesure) entre des premières positions et deuxièmes positions ont été calculés au total, à savoir :

| Caps | 10° | 60° | 85° | 188° | 270° |
|---|---|---|---|---|---|
| Nombre de valeurs Ymesure | 50 | 100 | 45 | 122 | 25 |
| Nombre de valeurs pour la régression circulaire | 1 moyenne des 50 valeurs | 1 moyenne des 100 valeurs | 1 moyenne des 45 valeurs | 1 moyenne des 122 valeurs | 1 moyenne des 25 valeurs |

On comprend que, lors de la régression circulaire réalisée sur la moyenne des écarts Ymesure par série de cap, un poids équivalent est donné à tous les caps alors que le nombre de valeurs aux caps 10°, 85° et 270° est ici au minimum deux fois moindre que le nombre de valeurs des caps 60° et 188°.

La régression linéaire va permettre de détecter si ce déséquilibre est préjudiciable à la précision du calcul des erreurs par la régression circulaire.

Pour effectuer la régression linéaire, on part des 342 premiers écarts Ymesure et on calcule la valeur de chacun de ces premiers écarts après une rotation opposée au cap pour ramener les premiers écarts sur un même cap et obtenir des valeurs de troisième écart Y, soit Y=Z(-cap).Ymesure. Par régression linéaire, on obtient une droite représentant l'ensemble des valeurs Y et on en déduit l'erreur d'harmonisation entre le dispositif de mesure inertielle 320 et les viseurs stellaires 330 du dispositif de visée stellaire 3, et l'erreur d'attitude du plan horizontal du dispositif de mesure inertielle 320. Le rayon r2 du cercle C2 est égal à l'erreur d'harmonisation et l'écart entre le centre c2 du cercle C2 et l'origine o du repère polaire P est égal à l'erreur d'attitude du dispositif de mesure inertielle 320. Si les cercles C1 et C2 ne sont pas cohérents, il est possible de redéfinir un cercle C1 en écartant les valeurs de l'un des caps pour lequel le nombre de valeurs est faible de manière à déterminer si l'incohérence ne résulte pas du poids trop important qui a été donné à ce cap lors de la régression linéaire.

Les régressions sont calculées de manière classique par exemple par un filtrage de Kalman ou la méthode des moindres carrés.

On note qu'il est possible de faire tourner la platine 312 pour mettre en œuvre le procédé lorsque l'avion A est tenu de voler pendant une longue durée selon un même cap. On procède alors périodiquement à ces phases de surveillance de l'erreur d'harmonisation entre le dispositif de mesure inertielle 320 et les viseurs stellaires 330 du dispositif de visée stellaire 3 et de l'erreur d'attitude du dispositif de mesure inertielle 320. En revanche, lorsque l'avion A subit des changements de cap, le procédé est mis en œuvre en temps réel en gardant la platine 312 fixe : les premiers écarts sont calculés et placés dans le repère polaire P en temps réel. On procède alors à une phase de surveillance continue de l'erreur d'harmonisation entre le dispositif de mesure inertielle 320 et les viseurs stellaires 330 du dispositif de visée stellaire 3 et de l'erreur d'attitude du dispositif de mesure inertielle 320.

Bien entendu, l'invention n'est pas limitée au mode de réalisation décrit mais englobe toute variante entrant dans le champ de l'invention telle que définie par les revendications.

En particulier, le système de visée selon l'invention peut avoir une structure différente de celle décrite.

Les unités électroniques peuvent être séparées les unes des autres ou au contraire être regroupées en une ou plusieurs unités électroniques. Les algorithmes peuvent être distincts ou plusieurs peuvent faire partie d'un unique algorithme. Plusieurs des programmes informatiques mis en œuvre peuvent être des programmes informatiques séparés ou former des parties d'un unique programme informatique.

Le dispositif de visée stellaire peut être dépourvu de table rotative. Il comprend alors avantageusement au moins deux viseurs et de préférence trois viseurs disposés à 120° les uns des autres et fixés à la structure du véhicule qui forme alors support. Pour obtenir des mesures selon différents caps du véhicule, il faut commander des mouvements correspondants du véhicule et effectuer les mesures pour les différents caps.

Le nombre d'unités de mesure inertielle équipant le véhicule peut être inférieur ou supérieur à deux. L'invention peut par exemple être mise en œuvre avec un véhicule comprenant une unique unité de mesure inertielle dédiée à la fois à la navigation inertielle et au pointage du dispositif de visée optique. Dans ce cas, si l'unité de mesure inertielle est éloignée du dispositif de visée stellaire, il faudra prévoir de tenir compte des déformations éventuelles de la structure du véhicule entre le dispositif de visée stellaire et l'unité de mesure inertielle : un système de mesure de déformation par miroir est utilisable à cette fin. Il est possible également que l'unique dispositif de mesure inertielle soit celui associée au dispositif de visée stellaire. Les déformations entre le dispositif de visée stellaire et le centre de gravité, de portance, ou de carène, selon le type de véhicule, devront être prises en compte.

Le procédé peut comporter une ou plusieurs étapes différentes. Par exemple, le procédé peut ne pas comporter les étapes permettant de définir et tracer le cercle C2.

Le terme véhicule concerne tout moyen de transport :

- de passagers, de marchandises et/ou autres charges (capteurs, explosifs ou autre)...,
- civil ou militaire,
- piloté ou non,
- tel que des aéronefs (avions, hélicoptères, drones), des navires (de surface, voire sous-marins naviguant en surface, drones), des automobiles terrestres (voitures, camions, moto, drones, char d'assaut..., à roues ou à chenilles), des projectiles (missiles par exemple) ...

Le dispositif peut être également mis en œuvre pour effectuer une vérification de l'harmonisation des deux têtes de visée stellaire au sol.

**Revendications**

1. Procédé de navigation d'un véhicule (A) équipé d'un dispositif de visée stellaire (3), d'un premier dispositif de mesure inertielle (320) et d'un dispositif de positionnement satellitaire (2), le dispositif de visée stellaire et le premier dispositif de mesure inertielle étant solidaires d'un même support (312), comprenant les étapes de :

   - commander des mouvements du support selon différents caps de visée du dispositif de visée stellaire,
   - simultanément à ces mouvements, calculer dans un plan horizontal, des premières positions du véhicule à partir d'un premier algorithme de navigation utilisant des mesures stellaires, et des deuxièmes positions du véhicule à partir d'un deuxième algorithme de navigation utilisant des premières mesures inertielles issues du premier dispositif de mesure inertielle en couplage avec des mesures satellitaires,
   - calculer des premiers écarts entre les premières positions et les deuxièmes positions correspondant à chaque cap de visée et les représenter dans un repère polaire (P) en fonction du cap correspondant et des valeurs des premiers écarts,
   - effectuer une régression circulaire sur lesdits premiers écarts pour déterminer dans ce repère polaire un premier cercle (C1) représentatif de l'ensemble des premiers écarts,
   - déterminer un rayon (r1) du premier cercle, ce rayon étant représentatif d'une erreur d'harmonisation entre le dispositif de mesure inertielle et le dispositif de visée stellaire, et un deuxième écart entre un centre (o1) du premier cercle et une origine (O) du repère polaire, le deuxième écart étant représentatif d'une erreur d'attitude du plan horizontal du dispositif de mesure inertielle,
   - surveiller l'erreur d'harmonisation et l'erreur d'attitude du plan horizontal.

2. Procédé selon la revendication 1, dans lequel les premiers écarts sont représentés dans le repère polaire (P) sous forme d'une moyenne des valeurs des premiers écarts par cap.

3. Procédé selon la revendication 1 ou 2, comprenant les étapes de

   - ramener tous les premiers écarts à un même cap pour obtenir des troisièmes écarts,
   - effectuer une régression linéaire sur les troisièmes écarts pour obtenir une droite représentative de l'ensemble des troisièmes écarts,
   - en déduire une erreur d'attitude du plan horizontal et une erreur d'harmonisation entre le dispositif de visée stellaire (3) et le dispositif de mesure inertielle (320),
   - définir dans le repère polaire (P) un deuxième cercle (C2) ayant un rayon (r2) égal à l'erreur d'harmonisation et un centre (o2) séparé d'une origine (o) du repère polaire (P) selon un vecteur correspondant à l'erreur d'attitude du plan horizontal en fonction du cap,
   - vérifier une cohérence entre le premier cercle (C1) et le deuxième cercle.

4. Procédé selon l'une quelconque des revendications précédentes, comprenant l'étape de déterminer un indicateur représentatif de la cohérence entre le premier cercle (C1) et le deuxième cercle (C2).

5. Procédé selon l'une quelconque des revendications précédentes, dans lequel les premiers écarts sont calculés et placés dans le repère polaire (P) en temps réel.

6. Procédé selon l'une quelconque des revendications précédentes, dans lequel les mouvements en cap du support sont obtenus en commandant des mouvements correspondants du véhicule (A).

7. Procédé selon l'une quelconque des revendications 1 à 5, dans lequel les mouvements en cap du support sont obtenus en faisant pivoter le support (312) par rapport au véhicule (A).

8. Procédé selon l'une quelconque des revendications précédentes, dans lequel :

   - le premier dispositif de mesure inertielle (320) est associé au dispositif de visée stellaire (3) et les premières mesures inertielles sont utilisées pour déterminer une orientation du dispositif de visée stellaire dont dépendent les mesures stellaires ;
   - le véhicule (A) comprend un deuxième dispositif de mesure inertielle (1) fournissant des deuxièmes mesures inertielles qui sont utilisées en couplage avec les mesures satellitaires pour élaborer des troisièmes positions au moyen d'un troisième algorithme de navigation, les troisièmes positions étant utilisées pour diriger le véhicule.

9. Procédé selon l'une quelconque des revendications précédentes, mis en œuvre pour effectuer une vérification d'une harmonisation du dispositif de visée stellaire alors que le véhicule est immobile.

10. Système de navigation pour véhicule, comprenant un dispositif de visée stellaire (3), un dispositif de mesure inertielle (320), un dispositif de positionnent satellitaire (2), et une unité électronique de calcul de navigation (4) reliée à ceux-ci, le dispositif de visée stellaire et le dispositif de mesure inertielle étant solidaires d'un même support (312) et l'unité électronique de calcul de navigation étant programmée pour mettre en œuvre le procédé selon l'une quelconque des revendications précédentes.

11. Véhicule équipé d'un système selon la revendication précédente.

## Patentansprüche

1. Navigationsverfahren zur Navigation eines Fahrzeugs (A), das mit einer Sternvisiervorrichtung (3), einer ersten Trägheitsmessvorrichtung (320) und einer satellitengestützten Positionbestimmungsvorrichtung (2) ausgestattet ist, wobei die Sternvisiervorrichtung und die erste Trägheitsmessvorrichtung fest mit ein und demselben Träger (312) verbunden sind, wobei das Verfahren die Schritte umfasst, dass:

   - die Trägerbewegungen gemäß verschiedenen Visierzielen der Sternvisiervorrichtung gesteuert werden,
   - mit diesen Bewegungen gleichzeitig ablaufend, erste Fahrzeugpositionen anhand eines ersten Navigationsalgorithmus unter Verwendung von Sternmessungen in einer horizontalen Ebene berechnet werden, und zweite Fahrzeugpositionen anhand eines zweiten Navigationsalgorithmus unter Verwendung von ersten Trägheitsmessungen aus der ersten Trägheitsmessvorrichtung gekoppelt mit Satellitenmessungen in einer horizontalen Ebene berechnet werden,
   - erste Abweichungen zwischen den ersten Positionen und den zweiten Positionen für jedes Visierziel berechnet werden und diese in Abhängigkeit zu dem entsprechenden Ziel und zu den Werten der ersten Abweichungen in einem Polarkoordinatensystem (P) darstellt werden,
   - eine zirkuläre Regression auf die ersten Abweichungen angewandt wird, um in dem Polarkoordinatensystem einen ersten Kreis (C1) zu ermitteln, der die Gesamtheit der ersten Abweichungen darstellt,
   - ein Radius (r1) des ersten Kreises ermittelt wird, wobei dieser Radius einen Harmonisierungsfehler zwischen der Trägheitsmessvorrichtung und der Sternvisiervorrichtung darstellt, und eine zweite Abweichung zwischen einem Mittelpunkt (o1) des ersten Kreises und einem Ursprung (0) des Polarkoordinatensystems ermittelt wird, wobei die zweite Abweichung einen Lagefehler der horizontalen Ebene der Trägheitsmessvorrichtung darstellt,
   - der Harmonisierungsfehler und der Lagefehler der horizontalen Ebene überwacht werden.

2. Verfahren nach Anspruch 1, wobei in dem Polarkoordinatensystem (P) die ersten Abweichungen für jedes Ziel als ein Mittelwert aus den Werten der jeweils ersten Abweichungen dargestellt werden.

3. Verfahren nach Anspruch 1 oder 2, welches die Schritte umfasst, dass:

- alle ersten Abweichungen auf ein und dasselbe Ziel zusammengeführt werden, um dritte Abweichungen zu erhalten,
- eine lineare Regression auf die dritten Abweichungen angewandt wird, um eine Gerade zu erhalten, welche die Gesamtheit der dritten Abweichungen darstellt,
- daraus ein Lagefehler der horizontalen Ebene und ein Harmonisierungsfehler zwischen der Sternvisiervorrichtung (3) und der Trägheitsmessvorrichtung (320) abgeleitet werden,
- in dem Polarkoordinatensystem (P) ein zweiter Kreis (C2) definiert wird, welcher einen Radius (r2) aufweist, der dem Harmonisierungsfehler entspricht, und welcher einen Mittelpunkt (o2) aufweist, der von einem Ursprung (o) des Polarkoordinatensystems (P) gemäß einem Vektor getrennt ist, der dem Lagefehler der horizontalen Ebene in Abhängigkeit zu dem Ziel entspricht,
- eine Kohärenz zwischen dem ersten Kreis (C1) und dem zweiten Kreis überprüft wird.

4. Verfahren nach einem der vorhergehenden Ansprüche, umfassend den Schritt, dass ein Indikator für die Kohärenz zwischen dem ersten Kreis (C1) und dem zweiten Kreis (C2) ermittelt wird.

5. Verfahren nach einem der vorhergehenden Ansprüche, wobei die ersten Abweichungen in Echtzeit berechnet und in das Polarkoordinatensystem (P) eingetragen werden.

6. Verfahren nach einem der vorhergehenden Ansprüche, wobei die zielgebundenen Bewegungen des Trägers durch die Steuerung entsprechender Bewegungen des Fahrzeugs (A) erzielt werden.

7. Verfahren nach einem der Ansprüche 1 bis 5, wobei die zielgebundenen Bewegungen des Trägers durch ein Verschwenken des Trägers (312) in Bezug auf das Fahrzeug (A) erzielt werden.

8. Verfahren nach einem der vorhergehenden Ansprüche, wobei:

   - die erste Trägheitsmessvorrichtung (320) der Sternvisiervorrichtung (3) zugeordnet ist und die ersten Trägheitsmessungen dazu verwendet werden, eine Ausrichtung der Sternvisiervorrichtung zu ermitteln, von welcher die Sternmessungen abhängig sind;
   - das Fahrzeug (A) eine zweite Trägheitsmessvorrichtung (1) umfasst, die zweite Trägheitsmessungen bereitstellt, welche in Koppelung mit den Satellitenmessungen dazu verwendet werden, mithilfe eines dritten Navigationsalgorithmus dritte Positionen zu erstellen, wobei die dritten Positionen zur Lenkung des Fahrzeugs verwendet werden.

9. Verfahren nach einem der vorhergehenden Ansprüche, welches ausgeführt wird, um eine Überprüfung einer Harmonisierung der Sternvisiervorrichtung durchzuführen, während sich das Fahrzeug nicht bewegt.

10. Navigationssystem für ein Fahrzeug, umfassend eine Sternvisiervorrichtung (3), eine Trägheitsmessvorrichtung (320), eine satellitengestützte Positionbestimmungsvorrichtung (2) und eine mit diesen verbundene elektronische Navigationsberechnungseinheit (4), wobei die Sternvisiervorrichtung und die Trägheitsmessvorrichtung fest mit ein und demselben Träger (312) verbunden sind, und wobei die elektronische Navigationsberechnungseinheit derart programmiert ist, dass sie das Verfahren nach einem der vorhergehenden Ansprüche ausführt.

11. Fahrzeug, das mit einem System nach dem vorhergehenden Anspruch ausgestattet ist.

## Claims

1. Navigation method of a vehicle (A) equipped with a star tracking device (3), a first inertial measurement device (320) and a satellite positioning device (2), the star tracking device and the first inertial measurement device being rigidly connected to a single support (312), comprising the steps of:

   - controlling movements of the support according to different tracking headings of the star tracking device,
   - simultaneously with these movements, calculating in a horizontal plane, first positions of the vehicle on the basis of a first navigation algorithm using stellar measurements, and second positions of the vehicle on the basis of a second navigation algorithm using first inertial measurements coming from the first inertial measurement device coupled with satellite measurements,
   - calculating first deviations between the first positions and the second positions corresponding to each tracking heading and depicting them in a polar reference frame (P) as a function of the corresponding heading and values of the first deviations,

- carrying out a circular regression on said first deviations to determine, in this polar reference frame, a first circle (C1) representative of all of the first deviations,

- determining a radius (r1) of the first circle, this radius being representative of a harmonisation error between the inertial measurement device and the star tracking device, and a second deviation between a centre (o1) of the first circle and an origin (O) of the polar reference frame, the second deviation being representative of an attitude error of the horizontal plane of the inertial measurement device,

- monitoring the harmonisation error and the attitude error of the horizontal plane.

2. Method according to claim 1, wherein the first deviations are depicted in the polar reference frame (P) in the form of an average of the values of the first deviations per heading.

3. Method according to claim 1 or 2, comprising the steps of:

- returning all the first deviations to a single heading to obtain third deviations,
- carrying out a linear regression on the third deviations to obtain a straight line representative of all of the third deviations,
- deducing from this, an attitude error of the horizontal plane and a harmonisation error between the star tracking device (3) and the inertial measurement device (320),
- defining in the polar reference frame (P), a second circle (C2) having a radius (r2) equal to the harmonisation error and a centre (o2) separated from an origin (o) of the polar reference frame (P) according to a vector corresponding to the attitude error of the horizontal plane as a function of the heading,
- verifying a coherence between the first circle (C1) and the second circle.

4. Method according to any one of the preceding claims, comprising the step of determining an indicator representative of the coherence between the first circle (C1) and the second circle (C2).

5. Method according to any one of the preceding claims, wherein the first deviations are calculated and placed in the polar reference frame (P) in real time.

6. Method according to any one of the preceding claims, wherein the heading movements of the support are obtained by controlling corresponding movements of the vehicle (A).

7. Method according to any one of claims 1 to 5, wherein the heading movements of the support are obtained by making the support (312) pivot with respect to the vehicle (A).

8. Method according to any one of the preceding claims, wherein:

- the first inertial measurement device (320) is associated with the star tracking device (3) and the first inertial measurements are used to determine an orientation of the star tracking device on which the stellar measurements depend;
- the vehicle (A) comprises a second inertial measurement device (1) providing second inertial measurements which are used coupled with the satellite measurements to develop third positions by means of a third navigation algorithm, the third positions being used to direct the vehicle.

9. Method according to any one of the preceding claims, implemented to carry out a verification of a harmonisation of the star tracking device, while the vehicle is immobile.

10. Navigation system for a vehicle, comprising a star tracking device (3), an inertial measurement device (320), a satellite positioning device (2), and an electronic navigation calculation unit (4) connected to these, the star tracking device and the inertial measurement device being rigidly connected to a single support (312) and the electronic navigation calculation unit being programmed to implement the method according to any one of the preceding claims.

11. Vehicle equipped with a system according to the preceding claim.

Fig. 1

Fig. 2

**Fig. 3**

Fig. 4

**Fig. 5**

EP 4 430 362 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2021247188 A1